# EUROPÄISCHE PATENTSCHRIFT

(11) **EP 0 464 331 B1**
(45) Veröffentlichungstag und Bekanntmachung des Hinweises auf die Patenterteilung: **14.12.1994**
(21) Anmeldenummer: 91106201.6
(22) Anmeldetag: 18.04.1991
(51) Int. Cl.: B21C 37/08, B23D 79/00, B23D 79/02

(54) **Verfahren und Vorrichtung zur Erzeugung kurzer Späne bei der Innenentgratung längsnahtgeschweisster Rohre**
Procedure and device for the generation of short chips at the internal burring of straight head welded pipes
Procédé et dispositif pour produire des copeaux courts chez l'ébarbage en dedans de tubes avec soudure longitudinale

(30) Priorität: 30.06.1990 DE 4020924
(43) Veröffentlichungstag der Anmeldung: 08.01.1992
(73) Patentinhaber: MHP Mannesmann Hoesch Präzisrohr GmbH, D-59067 Hamm (DE)
(72) Erfinder: Engler, Bernd, W-4700 Hamm (DE); Will, Helmut, W-4700 Hamm (DE)
(74) Vertreter: Meissner, Peter E., Dipl.-Ing.

(56) Entgegenhaltungen:
- GB-A- 742 162
- GB-A- 2 120 147

## Beschreibung

Die Erfindung betrifft ein Verfahren und eine Vorrichtung zur Erzeugung kurzer Späne bei der Innenentgratung längsnahtgeschweißter Rohre.

Bei der Herstellung von längsnahtgeschweißten Rohren, insbesondere bei Stahlrohren, welche mittels z. B. eines Formrollen- oder -käfigsystems vom Band zu einem Schlitzrohr geformt und darauffolgend verschweißt werden, entsteht durch den im Schweißpunkt vorhandenen Druck auf die Bandkanten ein Innen- und ein Außenwulst von ausgestauchtem schmelzflüssigen Material.
Dieses Material wird regelmäßig hinter dem Schweißpunkt auf der Innen- und der Außenseite durch Entgratwerkzeuge abgeschabt. Der hierbei durch die Außenentgratung entstehende Außenspan ist relativ leicht zu handhaben und kann aufgrund seiner Zugänglichkeit und des zur Verfügung stehenden unbegrenzten Arbeitsraumes in Schrottkübel geleitet, mechanisch, manuell oder automatisch in kürzere Späne getrennt und abgeführt oder auch über z. B. Führungsrinnen einer Zerhackerstation zugeleitet werden.

Der durch die Innenentgratung entstehende Innenspan verbleibt jedoch als durchgehender langer Span im Rohr.

Dieser lange Span erzeugt nicht nur Nachteile beim nachträglichen Trennen des "unendlichen" Rohrstranges in Einzelrohre - z. B. durch höheren Sägeblattverschleiß aufgrund unregelmäßiger stoßartiger Belastung der Sägezähne - sondern birgt, da er oft teilweise aus den Einzelrohren austritt und an deren Ende überhängt, z. B. beim Quertransport der Einzelrohre große Gefahren für das in dem jeweiligen Bereich tätige Personal. Zudem läßt sich dieser lange Span nur sehr aufwendig durch Druckwasser oder lange Bürsten entfernen.

Zur Vermeidung dieser Nachteile wurde bereits vorgeschlagen, den Innenspan vor der Innenentgratung zur Erzeugung von kürzeren oder leicht brechenden Spänen einzukerben.
Durch die dazu eingesetzten Kerbrollen können jedoch Beschädigungen der Rohrinnenoberfläche entstehen oder auch Tiefkerbungen, die zur Unterschreitung der Mindestwanddicke im Nahtbereich führen und Spannungsspitzen und Kerbwirkungen bei späteren Innendruckbelastungen provozieren.

Weiterhin ist durch DE 32 19 369-A1 ein Verfahren und eine Vorrichtung zur Erzielung kurzer Späne offenbart. Hierbei übt der beim Abschaben entstehende Span eine Drehkraft eines Werkzeugträgers bewirkende Querkraft auf die an diesen Werkzeugträger schräg angeordneten Schneidmittel aus. Die nebeneinander überdeckend angeordneten Schneidmittel kommen nacheinander zum Einsatz und erzeugen so kurze Einzelspäne.

Da jedoch bekanntermaßen die Belastungsspitzen gerade für Warmarbeitsstähle bei der genannten Innenentgratung beim Einlaufen bzw. Auslaufen des Schneidmittels in das/aus dem Werkstück - hier der Innenstauchwulst - entstehen, ergibt sich bei dem durch die oben genannte Schrift offenbarten Verfahren aufgrund des ständigen Schneidmittelwechsels eine nachteilige Minderung der Schneiden-Standzeit.

Desweiteren erzeugen die zur Aufrechterhaltung der Drehbewegung nötigen Querkräfte Reaktionskräfte auf das Schabewerkzeug, welche insbesondere bei der üblichen Aufhängung der Schabewerkezuge an relativ langen Kaltestangen zu nachteiligen Querschwingungen und damit zu instabilen Schabeverhältnissen führen.

Eine gattungsbestimmende Vorrichtung zum Innenentgraten längsnahtgeschweißter Rohre ist aus den GB-A-742162 bekannt. Diese Vorrichtung weist ein Schabewerkzeug auf, das innerhalb des langsnahtgeschweißten Rohres hinten dem Schweißpunkt angeondnet und mittels eines Trägers und eines mit einem von dem Schweißpunkt im Beneich des noch nicht geschlossenen Rohnes außerhalb des Rohres befestigten Haltearmes vensehenen Haltemittels fixiert ist. Den Träger ist als einstückigen zylindrischen Körper ausgebildet, dessen Durchmessen nur etwas geringen ist als den Innendurchmessen des zu schabenden Rohres. Der Träger weist in Längsrichtung versetzt öffnungen und Ausnehmungen auf, in denen fest bzw. radial bewegbar Stützrollen für den Träger angeordnet sind. An dem dem Schabebereich abgewandten Ende weist der Träger ein Kupplungsstück auf, an dem eine Haltestange befestigbar ist. Die im Schabebereich vorgesehene öffnung im Trägen dient der ungehinderten Abfuhr des durchgehenden langen Spanes. Nachteilig bei dieser Konstruktion ist der beschränkte Einsatzbereich des Schabewerkzeuges in bezug auf stark unterschiedliche Innendurchmesser von zu schabenden längsnahtgeschweißten Rohren sowie die eingangs schon geschilderten Schwierigkeiten des Verbleibens eines durchgehenden Spanes im Rohr.

Der Erfindung lag also die Aufgabe zugrunde, ein Verfahren und eine Vorrichtung bereitzustellen, bei denen die bekannten Nachteile vermieden werden, eine Erzeugung kurzer Innenspäne bei gleichmäßiger Schabegeometrie erreicht, eine reproduzierbare Einstellung der Schabemittel sowie leichtes und produktionssicheres Auswechseln der Schabe- und Schneidmittel ermöglicht wird und bei denen im späteren Betrieb der innen entgrateten Rohre nachteilig auswirkende Formeinflüsse im Nahtbereich nicht auftreten.

Gelöst wird diese Aufgabe durch die Merkmale des Anspruchs 1 und des Anspruchs 7.

Weitergehende vorteilhafte Ausbildungen sind in den jeweiligen Unteransprüchen erfaßt.

Das Verfahren beinhaltet im wesentlichen die Auftrennung des gesamten Vorgangs in die zwei Schritte des Schabens und des Schneidens, welche mit getrennten Werkzeugen durchgeführt werden, wobei die Schabung kontinuierlich und abhängig von der Rohrgeschwindigkeit und das Schneiden diskontinuierlich erfolgt. Dabei liegt der Richtungsvektor der Schabekraft in der durch die Rohrachse und die Schweißnaht des Rohres aufgespannten Ebene.

Der Vorteil dieses Verfahrens liegt darin, daß der eigentliche Vorgang des Innenentgratens durch die Schabewerkzeuge nach einmaligem Einfahren in den Stauchwulst stationär erfolgt, keine z. B. wellige oder anders periodisch von der Idealform abweichende Schabegeometrie entsteht und kein Absinken der Werkzeugstandzeit durch ständiges Ein- und Austauchen in das bzw. aus dem Material auftritt.

Bei der erfindungsgemäßen Verfahrensausbildung können keinerlei vertikale Querschwingungen des Schabewerkzeugs auftreten, da der Richtungsvektor der Schabekraft in der Ebene liegt, die durch die Rohrachse und die Schweißnaht aufgespannt wird und somit Reaktionskräfte erzeugt, die im wesentlichen in Längsrichtung parallel zur Haltestange des Werkzeuges wirken.

Ein unabhängig von der Rohrgeschwindigkeit erfolgendes Schneiden ermöglicht darüber hinaus vorteilhafte kurze Schnittfrequenzen und damit eine bis nahezu in den Zentimeterbereich einstellbare Spanlänge.

Das bezogen auf die Rohrbewegungsrichtung abwechselnd mitlaufend und gegenlaufend erfolgende Schneiden sowie die Lage des Richtungsvektors der Schnittkraft ebenfalls in der durch die Rohrachse und die Schweißnaht des Rohres aufgespannten Ebene gemäß den kennzeichenden Merkmalen des Anspruchs 3 reduziert in vorteilhafter Weise bei kleinen Rohrabmessungen und den zugehörigen relativ dünnen Haltestangen das Auftreten von quer zur Fertigungsrichtung wirkenden Schwingungen von Antriebsmassen.

In diesem Falle ist es zur weiteren Reduzierung der quer wirkenden Massenkräfte vorteilhaft, auch die Antriebskräfte für die antreibbaren Messer parallel zur Rohrachse in die durch die Rohrachse und die Schweißnaht des Rohres aufgespannte Ebene zu legen.

Aufgrund der Tatsache, daß durch die Größe und die konstruktive Ausführung der Werkzeugaufnahmen bei besonders großen Rohren, z. B. beginnend mit einem Innendurchmesser von 500 mm, Querschwingungen im wesentlichen nur noch durch Schabekräfte oder Antriebskräfte auftreten, lassen sich unter Beibehaltung der Trennung der Funktionen "Schaben" und "Schneiden" sowie des Richtungsvektors der Schabekraft bauliche Vorteile der Schneideinrichtung erreichen, wenn der Richtungsvektor der Schnittkraft die durch Rohrachse und die Schweißnaht aufgespannte Ebene schneidet bzw. quer zu ihr liegt.

Kleine Schnittfrequenzen werden hierbei in vorteilhafter Weise durch quer oszillierende Schneidwerkzeuge erreicht.

In dem Fall, in welchem die Antriebe zur Erzeugung der Antriebskraft innerhalb von elektrisch-widerstands-preßgeschweißten Längsnahtrohren angeordnet sind, ist es weiterhin vorteilhaft, diese Antriebskräfte zur Vermeidung von Störungen durch Induktionsströme durch Druckmedien, d. h. pneumatisch oder hydraulisch zu erzeugen.

Im Falle einer Übertragung der Antriebskraft durch parallel zur Haltestange wirkende Gestänge und/oder Spindeln läßt sich auf einfache Weise ein elektrischer Antrieb außerhalb des Rohres installieren.

Eine zur Durchführung des Verfahrens im besonderen Maße geeignete erfindungsgemäße Vorrichtung offenbart der Anspruch 7.

Bei dieser Vorrichtung sind in einem als entnehmbares Kastenprofil ausgebildeten Trägerrahmen das Schabewerkzeug und die Schneideinrichtung integriert und der Trägerrahmen und die Schneideinrichtung mit Öffnungen und Ausnehmungen zur Spanabfuhr versehen, so daß in vorteilhafter Weise unter Beibehaltung der Trennung der Funktion 'Schaben' und 'Schneiden' ein schneller und problemloser Werkzeugwechsel durch Austausch des gesamten Trägerrahmens durchgeführt werden kann.
Durch eine parallel zur Rohrachse 19 verschiebbare Schneideinrichtung werden darüber hinaus im Arbeitszustand quer zur Schabeeinrichtung wirkende Massenbeschleunigungen und damit die bereits geschilderten Nachteile für die Schabegeometrie vermieden.

Weiterhin vorteilhaft in Bezug auf die reproduzierbar kontinuierliche Schabefunktion ist die zusätzliche Kipp-Lagerung des Rahmens für das Schabe- und Schneidwerkzeug, welcher mittels zweier Kopierrollen - auch nach Werkzeugwechsel - selbst einstellend eine gleichmäßige Schabungsgeometrie ermöglicht.

Die Ausbildung der Vorrichtung gemäß des kennzeichnenden Teils des Anspruchs 11 erlaubt eine klein bauende und vorteilhafte Gestaltung zur Durchführung einer parallel zur Rohrlängsachse oszillierenden Schneidbewegung, bei welcher der Vor- und der Rückhub der Schneideinrichtung jeweils für einen Schnitt genutzt werden können.

Eine leichte Zugänglichkeit zur genauen Einstellung des Schabewerkzeugs bei kurzen Fertigungsstillständen wird durch die Anordnung von Aufnahme- und Feststelleinrichtungen 30, 31 und 32 erreicht, die den über den oberen Rand des Trägerrahmens 3 hinausragenden Schabestahl 29 aufnehmen und innerhalb einer Handhabungsausnehmung 34 leicht bedienbar sind.

Zur Vermeidung der Massenbeschleunigungen von z.B. parallel zur Führungsstange 2 laufenden Übertragungsgestängen wird der Antrieb für die Schneideinrichtung als Linearantrieb 42 ausgeführt und gemäß des kennzeichneden Teils des Anspruchs 13 innerhalb des Rohres integriert.

Bei elektrisch geschweißten Rohren ist dieser Linearantrieb zur Vermeidung von Beeinflussungen durch Induktionsströme als Hydraulik- oder Pneumatikzylinder ausgebildet.

Bei Rohren großen Durchmessers zieht man den Antrieb außerhalb des Rohres vor, da hier eine gute Zugänglichkeit Vorteile bringt.

Eine besonders einfache und für dickwandige und mit großen Geometrietoleranzen im Schabebereich herstellbaren Rohren geeignete Ausführung des Antriebs erreicht man durch einen innerhalb des Rohres angeordneten Reibradantrieb.

Anhand eines möglichen Ausführungsbeispiels soll der Aufbau und die Funktion der Vorrichtung näher dargestellt werden.

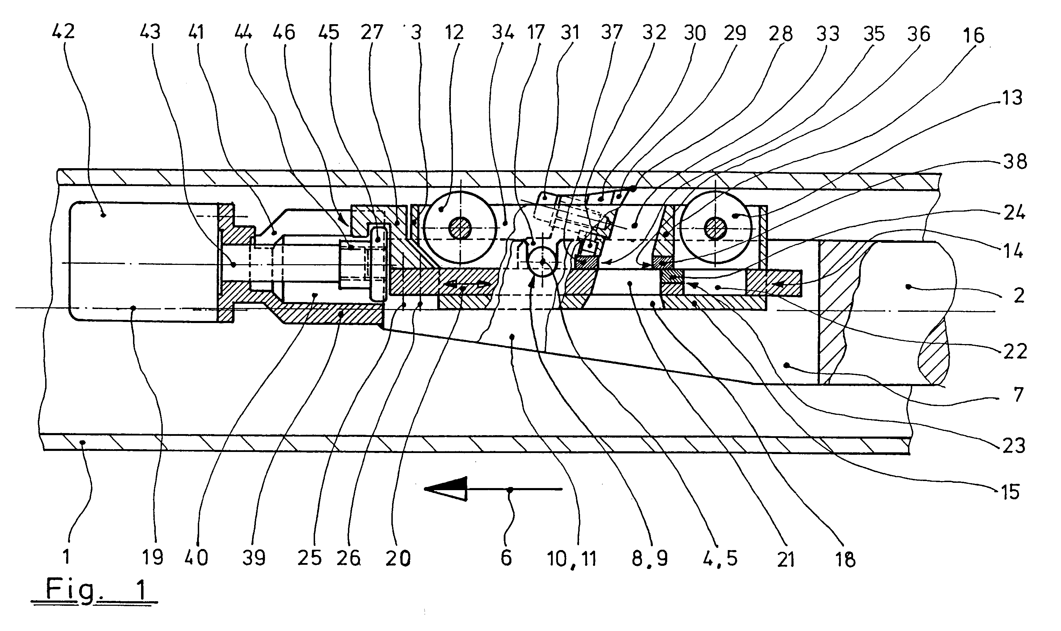

So zeigt die Fig. 1 eine innerhalb eines Rohres 1 angeordnete erfindungsgemäße Vorrichtung, welche in einer Führungsstange 2 mittels seitlich an dem Trägerrahmen 3 befindlichen Lagerbolzen 4 und 5 kippbar gelagert ist.
Hierzu weist die Führungsstange 2 an ihrem bezogen auf die Rohrbewegungsrichtung 6 ablaufseitigen Ende einen Längsschlitz 7 sowie Ausnehmungen 8 und 9 in ihren seitlichen Flanschen 10 und 11 zur Aufnahme der Lagerbolzen 4 und 5 auf. Der gesamte Trägerrahmen ist somit um 6° kippbar und kann sich mit Hilfe der drehbar gelagerten Kopierrollen 12 und 13 nach Einstellung des Betriebszustandes und Anstellung der Kopierrollen 12 und 13 an die Rohrinnenseite problemlos in einer stets zur Rohroberfläche parallelen Lage fixieren.

Das hier gezeigte Rohr 1 ist in der Schweißnahtmitte geschnitten, wobei die nicht näher dargestellte Schweißnaht durch die obere Schnittfläche repräsentiert wird.

Der Trägerrahmen 3 weist in seinem unteren Bereich eine Längsöffnung 14 auf, welche im wesentlichen durch einen unteren Steg 15 und zwei querstehenden Mittelstege 16 und 17 begrenzt wird. Im unteren Steg 15 befindet sich eine öffnung 18 zur Spanbfuhr.

Der parallel zur Rohrachse 19 innerhalb der Längsöffnung 14 verschiebbar angeordnete Messerhalter 20 zeigt zwei Ausnehmungen 21 und 22 zur Spanabfuhr und ist mit einer zwischen diesen Ausnehmungen angeordneten Quernut 23 zur Aufnahme des beidseitig schneidenden Untermessers 24 versehen.

Der Messerhalter 20 besitzt an dem der Führungsstange 2 abgewandten Ende Einrichtungen 25 und 26 zur Befestigung eines Mitnehmers 27. Bei dem vorliegenden Ausführungsbeispiel handelt es sich um nicht näher dargestellte versenkte Durchgangsbohrungen zur Aufnahme von Zylinderschrauben, welche in entsprechende auf der Unterseite des Mitnehmers 27 eingebrachte Gewindebohrungen eingeschraubt werden.

In dem zwischen den in Rohrbewegungsrichtung 6 vor und hinter dem Schabepunkt 28 angeordneten Kopierrollen 12 und 13 befindlichen Mittelsteg 17 des Trägerrahmens 3 ist der Schäbestahl 29 mittels Aufnahme- und Feststelleinrichtungen 30, 31 und 32 angeordnet und auf die gewünschte Schabetiefe eingestellt.
Bei dem Ausführungsbeispiel bestehen diese Einrichtungen aus der Grundplatte 30, der Feststellschraube 31 und der Justierschraube 32 zur Tiefeneinstellung.

Die Ausnehmung 33 zwischen den beiden Mittelstegen 16 und 17 dient wiederum der Spanabfuhr, die Ausnehmung 34 neben der Aufnahme der Kopierrolle der Handhabung z. B. der Feststellschraube 31 beim Werkzeugwechsel.

In den unteren Bereichen der Mittelstege 16 und 17 befinden sich jeweils Quernuten 35 und 36 zur Aufnahme der Obermesser 37 und 38.

Eine Halteglocke 39 ist am ablaufseitigen Ende der Führungsstange 2 fest mit deren seitlichen Flanschen 10 und 11 verschweißt.

Die Halteglocke 39 weist eine abgestufte Durchgangsbohrung 40 sowie eine Längsnut 41 auf zur Führung des Mitnehmers 27 und des damit verbundenen Messerhalters 20.

Ein am ablaufseitigen Ende der Halteglocke 39 befestigter Linearantrieb 42 - hier als Hydraulikzylinder ausgebildet - besitzt eine entgegen der Rohrbewegungsrichtung 6 durch die Durchgangsbohrung 40 ragende Schubstange 43, die mit einem Gewinde 44 versehen ist, auf welches ein Flansch 45 aufgeschraubt ist.

Der runde Flansch 45 greift - mit dem zur Wahrung der Kippung des Trägerrahmens 3 nötigen Spiel - unter den Kragen 46 des Mitnehmers 27.

Die nötigen Leitungen für die von außen eingespeiste Hydraulikflüssigkeit des Hydraulikzylinders 42 sind hier nicht näher dargestellt.

Im stationären Betriebszustand wird der Innenstauchwulst im Schabepunkt 28 mittels des Schabestahles 29 permanent geschabt und läuft durch die Ausnehmungen 33 und 21 sowie die öffnung 18 in die untere Rohrhälfte, stößt alsbald an die untere Rohrwandung und wird dort durch das in Rohrbewegungsrichtung 6 ablaufende Rohr mitgezogen. Nach einem jeweils von der gewünschten Spanlänge abhängigen Zeitintervall wird der doppelt wirkende Hydraulikzylinder 42 aktiviert und zieht über die Führungsstange 43, den Flansch 44 und über den Mitnehmer 27 den Messerhalter 20 soweit in Rohrbewegungsrichtung 6, bis die Ausnehmung 22 an dem Ort steht, an dem vorher die Ausnehmung 21 sich befand.

Bei diesem Vorgang wird der ablaufende Span durch die Messer 37 und 24 abgeschert. Der abgescherte Span wird durch die Rohrbewegung ablaufseitig abgeführt, während der weitere abgeschabte Span nun durch Ausnehmungen 33 und 22 sowie Öffnung 18 läuft.

Nach einem weiteren Zeitintervall drückt der dann in Gegenrichtung aktivierte Zylinder 42 den Messerhalter 20 wieder in die ursprüngliche Lage, wobei der Span nun durch die Messer 38 und 24 abgeschert wird und der weiter entstehende Span wiederum durch die Ausnehmungen 33 und 21 sowie die Öffnung 18 abläuft. Je nach dem vorgewählten Zeitintervall und damit der Schnittfrequenz ergeben sich Späne mit Längen im Zentimeter-, Dezimeter- oder Meterbereich, die auf einfachste Art nach Trennung der Rohre in Einzellängen ausgeblasen und ohne weitere Bearbeitung z. B. als Schrotteinsatz bei der Hochofenbeschickung verwertet werden können.

## Patentansprüche

1. Verfahren zur Innenentgratung längnahtgeschweißten Rohre (1), bei dem der Innengrat kontinuierlich mit einem feststehenden Stahl (29) abgeschabt wird, wobei den Richtungsvektor den Schabekraft in der durch die Rohrachse (19) und die Schweißnaht des Rohres (1) aufgespannten Ebene liegt
**dadurch gekennzeichnet,**
daß zur Erzeugung kurzer Späne der kontinuierlich abgeschabte Innengnat innerhalb des Rohres (1) diskontinuierlich mit einem antreibbaren Messen (24) geschnitten wird, wobei das Schaben abhängig und das Schneiden unabhängig von der Rohngeschwindigkeit erfolgt.

2. Verfahren nach Anspruch 1,
**dadurch gekennzeichnet,**
daß das Schneiden bezogen auf die Rohrbewegungsnichtung (6) abwechselnd mitlaufend und gegenlaufend erfolgt und den Richtungsvektor den Schnittkraft in er durch die Rohrachse (19) und die Schweißnaht des Rohres (1) aufgespannten Ebene liegt.

3. Verfahren nach Anspruch 1,
**dadurch gekennzeichnet,**
daß das Schneiden bezogen auf die Rohrbewegungsrichtung (6) quer oszillierend erfolgt und der Richtungsvektor den Schnittkraft die durch die Rohrachse (19) und die Schweißnaht des Rohres (1) aufgespannte Ebene schneidet.

4. Verfahren nach einem oder mehreren den vorhergehenden Ansprüche,
**dadurch gekennzeichnet,**
daß die Richtung den Antriebskraft für das antreibbare Messer (24) parallel zur Rohrachse (19) und in der durch die Rohrachse (19) und die Schweißnaht des Rohres (1) aufgespannten Ebene liegt.

5. Verfahren nach einem oder mehreren der vorhergehenden Ansprüche,
**dadurch gekennzeichnet,**
daß die Antriebskraft durch Druckmedien (42) innerhalb des Rohres (1) erzeugt wird.

6. Verfahren nach einem oder mehreren der Ansprüche 1 bis 4,
**dadurch gekennzeichnet,**
daß die Antriebskraft elektrisch außerhalb des Rohres (1) erzeugt wird.

7. Vorrichtung zur Durchführung des Verfahrens gemäß Anspruch 1 mit einem Schabewerkzeug, das innerhalb eines längsnahtgeschweißten Rohres (1) hinten dem Schweißpunkt angeordnet und mittels eines Trägers (3) und eines mit einem vor dem Schweißpunkt im Bereich des noch nicht geschlossenen Rohres außerhalb des Rohres befestigten Haltearmes versehenen Haltemittels (2) fixiert ist und in dem oberen Teil des Trägers (2) drehbar gelagerte üben dessen Rand hinausragende Kopierrollen (12,13) in Rohrbewegungsrichtung (6) vor und hinter dem Schabepunkt (28) angeordnet sind,
**dadurch gekennzeichnet,**
daß eine Führungsstange (2) und ein daran angeordneten Trägerrahmen (3) den Träger bilden und der Tragerrahmen (3) als entnehmbares Kastenprofil ausgebildet ist und Führungseinrichtungen (14) aufweist, in denen eine Schneideinrichtung (20) verschiebbar angeordnet ist und daß der Trägerrahmen (3) und die Schneideinrichtung (20) Öffnungen und Ausnehmungen (18,21,22,33) zur Spanabfuhr aufweisen.

8. Vorrichtung nach Anspruch 7,
d.g., daß die Schneideinrichtung (20) parallel zur Rohrachse (19) verschiebbar angeordnet ist.

9. Vorrichtung nach Anspruch 8,
dadurch gekennzeichnet,
daß die Führungsstange (2) an ihrem bezogen auf die Rohrbewegungsrichtung (6) ablaufseitigen Ende mit einem Längsschlitz (7) zur Aufnahme des Trägerrahmens (3) versehen ist, wobei der Trägerrahmen (3) mittels seitlicher Lagerbolzen (4, 5) kippbar in Ausnehmungen (8, 9) in den seitlichen Flanschen (10, 11) des Längsschlitzes (7) der Führungsstange (2) gelagert ist.

10. Vorrichtung nach einem oder mehreren der Ansprüche 8-9,
dadurch gekennzeichnet,
daß die Führungseinrichtung (14) als parallel zur Rohrachse verlaufende Längsöffnung im unteren Bereich des Trägerrahmens (3) ausgebildet und durch einen unteren Steg (15) und zwei Mittelstege (16, 17) begrenzt wird, wobei die Schneideinrichtung (20) als ein der Innenkontur der Führungseinrichtung (14) entsprechender Messerhalter ausgebildet ist und der Messerhalter im Bereich der Öffnung (18) des Trägerrahmens und zwischen den Ausnehmungen (21) und (22) des Messerhalters eine Quernut (23) zur Aufnahme eines Untermessers (24) aufweist,
und daß im unteren Bereich der Mittelstege (16, 17) des Trägerrahmens (3) in Rohrbewegungsrichtung (6) vor und hinter der Ausnehmung (33) zwei Quernuten (35, 36) zur Aufnahme zweier Obermesser (37, 38) vorhanden sind.

11. Vorrichtung nach einem oder mehreren der Ansprüche 8-10,
dadurch gekennzeichnet,
daß die Schneideinrichtung (20) an ihrem der Führungsstange (2) abgewandten Ende Befestigungseinrichtungen (25, 26) zur Aufnahme eines Mitnehmers (27) aufweist,
daß in Rohrbewegungsrichtung (6) hinter dem Trägerrahmen (3) und am Ende der Führungsstange (2) eine mit einer abgestuften Durchgangsbohrung (40) und einer Längsnut (41) versehene Halteglocke (39) zur Aufnahme eines endseitig angeordneten Linearantriebes (42) fest mit der Führungsstange (2) verbunden ist, wobei der Linearantrieb (42) eine entgegen der Rohrbewegungsrichtung (6) durch die Durchgangsbohrung (40) ragende mit einem Gewinde versehene Schubstange (43) aufweist, und die Schubstange (43) über einen Flansch (45) und den in der Längsnut (41) führbaren Mitnehmer (27) mit der Schneideinrichtung (20) verbunden ist.

12. Vorrichtung nach Anspruch 11,
dadurch gekennzeichnet,
daß der Linearantrieb (42) als Hydraulikzylinder ausgebildet ist.

13. Vorrichtung nach Anspruch 11,
dadurch gekennzeichnet,
daß der Linearantrieb (42) als Pneumatikzylinder ausgebildet ist.

14. Vorrichtung nach einem oder mehreren der Ansprüche 8-10,
dadurch gekennzeichnet,
daß die Schneideinrichtung (20) durch einen Motor von außerhalb des Rohres antreibbar ist und das Antriebsdrehmoment über eine Welle durch den Schlitz des Schlitzrohres zum Trägerrahmen (3) hin übertragbar ist.

15. Vorrichtung nach einem oder mehreren der Ansprüche 8-10,
dadurch gekennzeichnet,
daß die Schneideinrichtung (20) durch ein innerhalb des Rohres sitzendes Reibrad antreibbar ist, das in Produktionsrichtung des Rohrstranges drehbar und gegen die Innenfläche des Rohres gedrückt an die Führungsstange (2) angebaut ist.

## Claims

1. Process for the internal burring of straight bead welded pipes (1), in which the internal burr is continuously scraped off by a stationary tool (29), the direction vector of the scraping force lying in the plane which is spanned by the pipe axis (19) and the weld of the pipe (1),
characterized in that, in order to produce short chips, the internal burr which is continuously scraped off is intermittently cut inside the pipe (1) by a drivable blade (24), the scraping taking place in accordance with and the cutting independently of the pipe speed.

2. Process according to claim 1, characterized in that the cutting takes place alternately in the same and in the opposite direction to the direction of movement (6) of the pipe, and the direction vector of the cutting force lies in the plane which is spanned by the pipe axis (19) and the weld of the pipe (1).

3. Process according to claim 1, characterized in that the cutting takes place in a transversely oscillating manner in relation to the direction of movement (6) of the pipe, and the direction vector of the cutting force intersects the plane which is spanned by the pipe axis (19) and the weld of the pipe (1).

4. Process according to one or more of the preceding claims, characterized in that the direction of the driving force for the drivable blade (24) lies parallel to the pipe axis (19) and in the plane which is spanned by the pipe axis (19) and the weld of the pipe (1).

5. Process according to one or more of the preceding claims, characterized in that the driving force is produced by pressure media (42) inside the pipe (1).

6. Process according to one or more of claims 1 to 4, characterized in that the driving force is produced electrically outside of the pipe (1).

7. Device for carrying out the process according to claim 1, with a scraping tool which is arranged inside a straight bead welded pipe (1) after the weld point and is fixed by means of a carrier (3) and a holding means (2), which is provided with a holding arm fastened outside of the pipe before the weld point in the area of the pipe which is not yet closed, and duplicating rollers (12, 13), which are rotatably mounted in the upper part of the carrier (2) and project beyond the edge of the latter, are arranged before and after the scraping point (28) in the direction of movement (6) of the pipe, characterised in that a guide rod (2) and a carrier frame (3), which is arranged on the latter, form the carrier, and the carrier frame (3) is constructed as a removable box section and comprises guide devices (14), in which a cutting device (20) is arranged in a displaceable manner, and that the carrier frame (3) and the cutting device (20) comprise openings and recesses (18, 21, 22, 33) for chip removal.

8. Device according to claim 7, characterised in that the cutting device (20) is arranged such that it can be displaced parallel to the pipe axis (19).

9. Device according to claim 8, characterised in that the guide rod (2) is provided at its end which is on the delivery side - related to the direction of movement (6) of the pipe - with a longitudinal slot (7) for holding the carrier frame (3), the carrier frame (3) being mounted in a tiltable manner in recesses (8, 9) in the lateral flanges (10, 11) of the longitudinal slot (7) in the guide rod (2) by means of lateral bearing pins (4, 5).

10. Device according to one or more of claims 8 - 9, characterised in that the guide device (14) is formed as a longitudinal opening extending parallel to the pipe axis in the lower area of the carrier frame (3) and is defined by a lower web (15) and two central webs (16, 17), the cutting device (20) being formed as a blade holder corresponding to the inner contour of the guide device (14), and the blade holder comprising a transverse groove (23) in the area of the opening (18) in the carrier frame and between the recesses (21) and (22) in the blade holder to hold a lower blade (24), and that two transverse grooves (35, 36) are provided in the lower area of the central webs (16, 17) of the carrier frame (3) before and after the recess (33) in the direction of movement (6) of the pipe to hold two upper blades (37, 38).

11. Device according to one or more of claims 8 - 10, characterised in that the cutting device (20) comprises fastening devices (25, 26) at its end which is distant from the guide rod (2) for holding a driver (27), that a holding bell (39), which is provided with a stepped through-bore (40) and a longitudinal groove (41), for holding a linear drive (42) arranged at the end is firmly connected to the guide rod (2) after the carrier frame (3) in the direction of movement (6) of the pipe and at the end of the guide rod (2), the linear drive (42) comprising a connecting rod (43), which projects through the through-bore (40) against the direction of movement (6) of the pipe and is provided with a thread, and the connecting rod (43) is connected to the cutting device (20) via a flange (45) and the driver (27), which can be guided in the longitudinal groove (41).

12. Device according to claim 11, characterised in that the linear drive (42) is formed as a hydraulic cylinder.

13. Device according to claim 11, characterised in that the linear drive (42) is formed as a pneumatic cylinder.

14. Device according to one or more of claims 8 - 10, characterised in that the cutting device (20) can be driven by a motor from outside of the pipe and the driving torque can be transmitted to the carrier frame (3) via a shaft through the slot in the slotted pipe.

15. Device according to one or more of claims 8 - 10, characterised in that the cutting device (20) can be driven by a friction wheel which is mounted inside the pipe, can be rotated in the direction in which the piping is produced and is attached to the guide rod (2) so as to be pressed against the inner surface of the pipe.

## Revendications

1. Procédé pour le grattage interne de tubes (1) soudés longitudinalement, dans lequel les bavures internes sont raclées de façon continue par un outil de coupe fixe (29), le vecteur de direction de la force de raclement étant situé dans le plan formé par l'axe du tube (19) et la soudure du tube (1),
caractérisé en ce que, pour engendrer des copeaux courts, les bavures internes raclées de façon continue sont découpées à l'intérieur du tube (1) de façon discontinue par une lame (24) pouvant être entrainée, le raclement étant effectué dépendamment de la vitesse du tube et la découpe étant effectuée indépendamment de la vitesse du tube.

2. Procédé selon la revendication 1,
caractérisé en ce que la découpe est effectuée, relativement au sens (6) de mouvement du tube, de façon alternative dans le même sens et en sens opposé, et le vecteur de direction de la force de découpe est situé dans le plan formé par l'axe du tube (19) et la soudure du tube (1).

3. Procédé selon la revendication 1,
caractérisé en ce que la découpe est effectuée, relativement au sens (6) de mouvement du tube, de façon transversale et oscillante, et le vecteur de direction de la force de découpe coupe le plan formé par l'axe du tube (19) et la soudure du tube (1).

4. Procédé selon l'une ou plusieurs des revendications précédentes,
caractérisé en ce que la direction de la force d'entraînement pour la lame (24) pouvant être entraînée est située parallèlement à l'axe du tube (19) et dans le plan formé par l'axe du tube (19) et la soudure du tube (1).

5. Procédé selon l'une ou plusieurs des revendications précédentes,
caractérisé en ce que la force d'entraînement est engendrée par des fluides sous pression (42) à l'intérieur du tube (1).

6. Procédé selon l'une ou plusieurs des revendications 1 à 4,
caractérisé en ce que la force d'entraînement est engendrée électriquement à l'extérieur du tube (1).

7. Dispositif pour la mise en oeuvre du procédé spécifié sous la revendication 1 comportant un outil de raclement agencé à l'intérieur d'un tube (1) soudé longitudinalement derrière le point de soudure et fixé au moyen d'un support (3) et d'un moyen de maintien (2) muni d'un bras de maintien fixé devant le point de soudure dans la zone du tube qui n'est pas encore fermé à l'extérieur du tube, et des galets de gabarit (12,13) montés de façon rotative dans la partie supérieure du support (2) et faisant saillie au-delà du bord de celui-ci étant agencés dans le sens (6) de mouvement du tube en amont et en aval du point de raclement (28),
caractérisé en ce qu'une tige de guidage (2) et un cadre de support (3) qui y est agencé forment le support, et le cadre de support (3) est réalisé sous forme d'un profilé de caisson et comporte' des dispositifs de guidage (14), dans lesquels est agencé de façon coulissante un dispositif de découpe (20), et en ce que le cadre de support (3) et le dispositif de découpe (20) présentent des ouvertures et des évidements (18,21,22,33) pour l'évacuation des copeaux.

8. Dispositif selon la revendication 7,
caractérisé en ce que le dispositif de découpe (20) est agencé de façon coulissante parallèlement à l'axe du tube (19).

9. Dispositif selon la revendication 8,
caractérisé en ce que la tige de guidage (2) est munie, à son extrémité du côté d'écoulement relativement au sens (6) de mouvement du tube, d'une fente longitudinale (7) pour recevoir le cadre de support (3), le cadre de support (3) étant monté de façon basculante au moyen de boulons de palier latéraux (4,5) dans des évidements (8,9) dans les brides latérales (10,11) de la fente longitudinale (7) de la tige de guidage (2).

10. Dispositif selon l'une ou plusieurs des revendications 8 et 9,
caractérisé en ce que le dispositif de guidage (14) est réalisé sous forme d'une ouverture longitudinale s'étendant parallèlement à l'axe du tube dans la zone inférieure du cadre de support (3) et est limité par une barrette inférieure (15) et deux barrettes centrales (16,17), le dispositif de découpe (20) étant réalisé sous forme d'un élément de maintien de lame correspondant au contour interne du dispositif de guidage (14), et l'élément de maintien de lame présentant dans la zone de l'ouverture (18) du cadre de support et entre les évidements (21) et (22) de l'élément de maintien de lame une gorge transversale (23) pour recevoir une lame inférieure (24), et en ce que, dans la zone inférieure de la barrette centrale (16,17) du cadre de support (3) dans le sens (6) de mouvement du tube en amont et en aval de l'évidement (33), il existe deux gorges transversales (35,36) pour recevoir deux lames supérieures (37,38).

11. Dispositif selon l'une ou plusieurs des revendications 8 à 10,
caractérisé en ce que le dispositif de découpe (20) comporte à son extrémité opposée à la tige de guidage (2) des dispositifs de fixation (25,26) pour recevoir un élément d'entraînement (27), en ce que dans le sens (6) de mouvement du tube, derrière le bras de support (3) et à l'extrémité de la tige de guidage (2), une calotte de maintien (39) munie d'un perçage traversant (40) à gradins et d'une gorge longitudinale (41), pour recevoir un entraînement linéaire (42) agencé à l'extrémité, est solidaire de la tige de guidage (12), l'entraînement linéaire (42) comportant une tige de poussée (43) traversant le perçage traversant (40) dans le sens opposé au sens (6) de mouvement du tube et munie d'un filetage, et la tige de poussée (43) étant reliée au dispositif de découpe (20) par l'intermédiaire d'une bride (45) et de l'élément d'entraînement (27) pouvant être guidé dans la gorge longitudinale (41).

12. Dispositif selon la revendication 11,
caractérisé en ce que l'entraînement linéaire (42) est réalisé sous forme d'un vérin hydraulique.

13. Dispositif selon la revendication 11,
caractérisé en ce que l'entraînement linéaire (42) est réalisé sous forme d'un vérin pneumatique.

14. Dispositif selon l'une ou plusieurs des revendications 8 à 10,
caractérisé en ce que le dispositif de découpe (20) peut être entraîné par un moteur à partir de l'extérieur du tube, et le couple d'entraînement peut être transmis, par l'intermédiaire d'un arbre, à travers la fente du tube fendu, au cadre de support (3).

15. Dispositif selon l'une ou plusieurs des revendications 8 à 10,
caractérisé en ce que le dispositif de découpe (20) peut être entraîné par une roue de friction agencée à l'intérieur du tube et montée sur la tige de guidage (2), de façon rotative dans le sens d'élaboration de la ligne de tube et en étant pressée contre la face interne du tube.
